# EUROPEAN PATENT APPLICATION

(11) **EP 2 410 397 A2**
(43) Date of publication of application: **25.01.2012**
(21) Application number: 11174547.7
(22) Date of filing: 19.07.2011
(51) Int. Cl.: G05D 23/19

(54) **Environmental sensor touchscreen interface for public areas**

(30) Priority: 20.07.2010 US 839536
(71) Applicant: Honeywell International, Inc., Morristown, New Jersey 07962-2245 (US)
(72) Inventor: Kennard, Clive Warden, Calgary, Alberta T2J 6A3 (CA); Shubinsky, Gary D., Buffalo Grove, IL 60089 (US)
(74) Representative: Buckley, Guy Julian

(57) **Abstract**

A HVAC device (16) is provided. The device includes at least one environmental sensor (12), a control processor that compares data from the at least one environmental sensor with a reference value, the processor providing an output indicating the environmental data exceeds the reference value a communication interface coupled to the processor, the communication interface transfers the output of the control processor to a remotely located control panel and an interactive display coupled to the processor, the display depicting environmental data from the at least one environmental sensor for a predetermined time period after activation of the interactive display by a user and a blank screen thereafter.

## Description

### Field of the Invention

The field of the invention relates to environmental sensors and more particularly to environmental sensors for heating, ventilating and air conditioning (HVAC) systems.

### Background of the Invention

Sensors for HVAC systems are well known. A thermostat is one example of a device that is commonly used in homes and businesses for controlling the heating and cooling features of a building.

Thermostats are usually located in some convenient central location of a home or commercial building and is used to sense and control the interior temperatures of such buildings. A thermostat may include a bimetallic switch that is responsive to a changing temperature. In some cases, a thermostat may include a selector switch for switching between a heating mode during the winter and a cooling mode during the summer. When in a heating mode, the selector switch causes a set of contacts of the bimetallic switch to close on falling temperatures to activate a heating unit. Similarly, in a cooling mode, the selector switch cause a corresponding set of contacts to close upon rising temperatures to activate an air conditioning unit.

The outside of a thermostat is typically provided with a temperature indicator and a temperature selector. The selector may include a moveable lever or knob and a set of markings on the knob or lever indicating a temperature set point.

In commercial or public buildings, thermostats must be protected from tampering. Tampering usually occurs because the comfort level of different people occurs at different temperatures.

Tamper protection may include a lockable box that surrounds the thermostat. However, a lock on the thermostat often does not deter people from tampering with the thermostat and causing damage. Accordingly a need exists for better methods of protecting thermostats in public areas.

### Brief Description of the Drawings

FIG. 1 is a block diagram of a HVAC system in accordance with an illustrated embodiment of the invention;
FIG. 2 is a block diagram of a sensor system of the HVAC system of FIG. 1;
FIG. 3 is a display screen that may be shown on the sensor system of FIG. 2;
FIG. 4 is a password screen that may be shown on the sensor system of FIG. 2;
FIG. 5 is a function selection screen that may be shown on the sensor system of FIG. 2; and
FIG. 6 is a set point screen that may be shown on the sensor system of FIG. 2.

### Detail Description of an Illustrated Embodiment

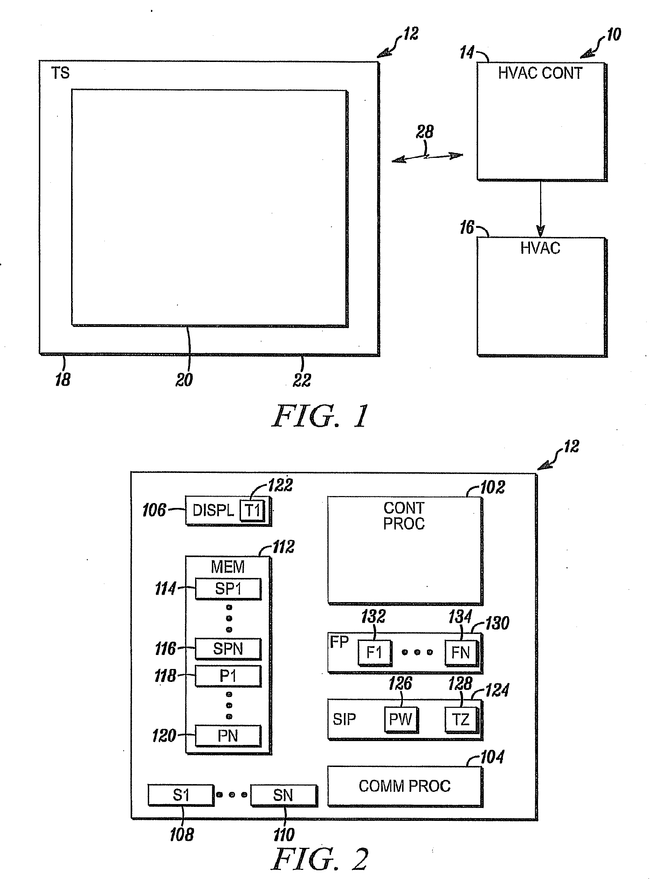

FIG. 1 is a block diagram of a heating, cooling and air conditioning (HVAC) system 10 shown generally in accordance with an illustrated embodiment of the invention. Included within the HVAC system 10 is a HVAC device 16, a HVAC controller 15 and one or more environmental sensor systems 12 incorporated into a self contained sensor station.

The HVAC device 16 may be a forced air circulation system including a combustion furnace, an air conditioner and an air blower that forces air through the furnace and air condition and that, then, circulates the air throughout a conditioned space. Alternatively, the HVAC device 16 may include a boiler and chiller with a glycol pump that circulates conditioned glycol throughout a conditioned space. In large spaces, the HVAC device 16 may include many heating and cooling devices, each for a different area within the large space and each with its own respective environmental sensor system 12.

The HVAC controller 14 may include one or more electrical switching systems that activates heating and cooling devices based upon one or more signals from the environmental sensor system 12. Based upon the signals from the environmental sensor system 12, the HVAC controller 14 may activate heating or cooling devices with or without air circulation or air circulation devices by themselves.

FIG. 2 is a simplified block diagram of an environmental sensor system 12. Included within each environmental sensor system 12 is one or more environmental sensors 108, 110, a processor 102 programmed to monitor environmental data (measured environmental parameters) from the sensors 108, 110, a communication interface processor 104 programmed to form a communication link 28 with the HVAC controller 14 and a display processor 106 programmed to display and receive information from an interactive display screen 20. The sensor system 12 may also include a programmable set point 114, 116 associated with each of the environmental sensors 108, 110 saved within the control processor 102 or within a memory (i.e., a non-transitory computer readable medium) 112. The memory 112 may also contain copies of the computer programs 118, 120 executed by the processors of the sensor system 12.

Under one illustrated embodiment of the invention, the sensors 108, 110 include a temperature sensor, a humidity sensor and a carbon dioxide sensor. The control processor 102 continuously reads sensor data (e.g., temperature in degree Fehrenheit, relative humidity, carbon monoxide in parts per million, etc.) from each of the sensors 108, 110 and compares the readings with a respective set point 114, 116. If the readings exceed the respective set point, the control processor 102 generates an output that the control processor 102 sends to the HVAC controller 14 through the communication processor 104.

Each environmental sensor system 12 may be enclosed within a wall-mounted enclosure 22 (FIG. 1). The front of the enclosure 22 is substantially covered by the display screen 20 (e.g., a liquid crystal display (LCD)). The display screen 20 incorporates a touch screen technology (e.g., capacitive, resistive, acoustic, etc.) that also allows the display processor 106 to receive selections from a user through the screen 20.

The display 20 may be substantially surrounded by a bezel 18. The color of the bezel 18 is selected to have the same general color and appearance as the display 20.

The HVAC system 10 may be programmed to operate based upon information from any of the sensors 108, 110. For example, the sensor system 12 and /or HVAC controller 14 may provide heat to a conditioned space based upon temperature alone. Alternatively, the sensor system 12 and HVAC controller 14 may be programmed to first cool and then reheat air within the conditioned space to reduce humidity or to simply replace air within the conditioned space based upon excessive amounts of carbon dioxide.

Upon start up of the system 10, the control processor 102, the communication interface 104 and display processor 106 may load a set of programs 118, 120 from memory 112 and begin executing those programs 118, 120. Following start up, the display processor 106 enters a default mode resulting in a blank display 20. A blank display in this case means that there is no relevant image on the screen 20.

In contrast, the control processor 102 begins monitoring readings from the sensors 108, 110 in real time. For each reading, the control processor 102 may compare the reading with the associated set point 114, 116. Upon detecting or otherwise determining that the reading exceeds the set point 114, 116, the control processor 102 may send a message to the HVAC controller 14. The message may include an identifier of the sensor system 12 and an identifier of the type of sensor 108, 110. Alternatively, the message may also include the actual sensor reading.

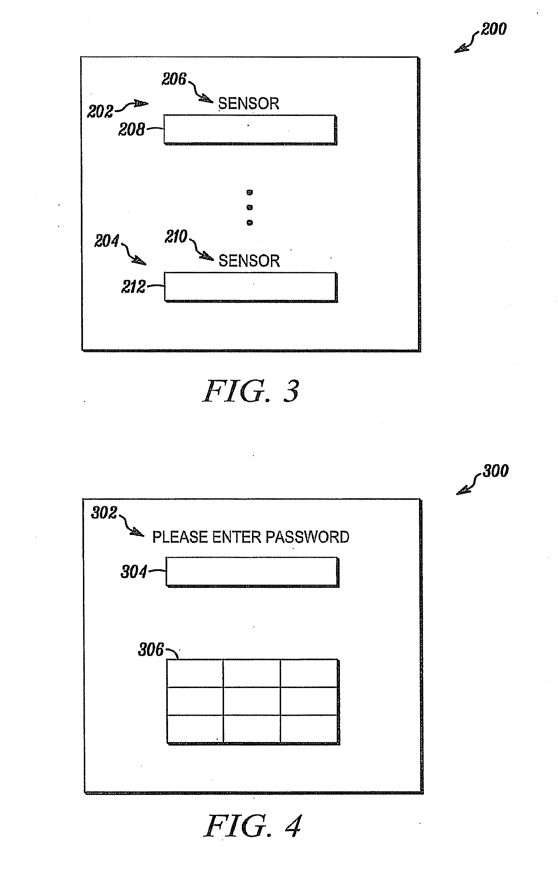

Under normal conditions, the display 20 remains blank. On the other hand, if a user taps on or otherwise touches any portion of the interactive display 20, then the display processor 106 receives a wake up message from the display 20. In response, the display processor 106 may enter an active state and display a real time sensor data screen 200 (FIG. 3). Included within the sensor data screen 200 may be a read out area 202, 204 for each sensor 108, 110. Within each read out area 202, 202 may be a first identification line 206, 208 of alphanumeric data that identifies the sensor by function. Located below the identification line 206, 208, may be a display 208, 212 that displays real time sensor data (e.g., in degrees Fehrenheit, relative humidity in percent, concentration of carbon dioxide in parts per million, etc.).

In conjunction with display of the data screen 200, the display processor 106 also activates a timer 122 that detects passage of a predetermined time period since the wake up message. If the predetermined time period passes without another wake up message from the screen 20 (i.e., without the user touching the screen 20 a second time), then the display processor 106 enters the default state and the screen 20 again goes blank.

While the display processor 106 is in the active state, the display processor 106 also monitors the display 20 for any further touching of or tapping on the display 20 by the user. If the user activates the display 20 a second time within the predetermined time period, then the display processor 106 activates a sign-in or password processor 124.

Once activated, the sign-in processor 124 display a sign-in screen 300 (FIG. 4). Included within the sign-in screen may be text 302 requesting entry of a password and a window 304 for entry of the password. The sign-in screen may also include a set of softkeys 306, each with an appropriate identifier (e.g., 1-9, a-z, ENTER, etc.). The user may use the soft-keys to enter his/her password by the appropriate sequence of softkeys.

The sign-in processor 124 may detect the sequence of softkeys and compare the entered values to a password 126 saved in memory. If the entered sequence matches the saved password 126, then the sign-in processor 126 may activate a function processor 130 allowing access to higher order control functions available through the display 20. Alternatively, if an incorrect password is entered, then the password processor 124 may simply prompt the user for the correct password.

In addition to monitoring for entry of the correct password, the password processor 124 may activate a timer or counter 128 that only allows a certain time period or number of incorrect passwords. If the timer or counter 128 exceeds the time limit or number of incorrect passwords, then the password processor 124 may cause the display processor 106 to revert to the default mode and display a blank screen.

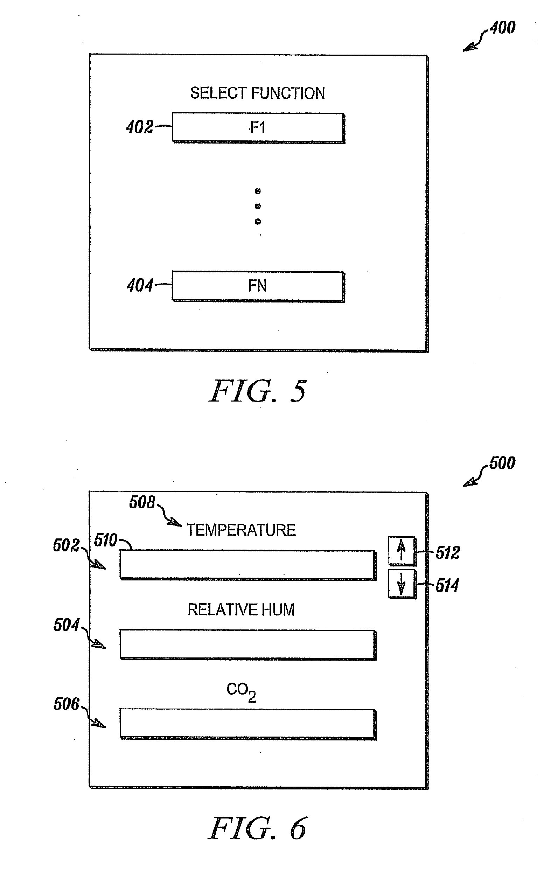

If the user enters the correct password, the function processor 130 may present a control screen 400 (FIG. 5) on the display 20. Included on the control screen may be a set of softkeys 402, 404 that allow selection of various control functions 132, 134 available through the control screen. For example, one function may be a set point change softkey. Activation of the set point change softkey 402, 404 allows the user access to view and change the set points 114, 116.

Other functions 402, 404 may be to disable certain sensor functions, such a humidity control in warehouse areas. Other functions 402, 404 that may be controlled through the screen 400 may include a timing function where different set points may be automatically selected for day light hours and other set points may be selected for night time hours.

In one example, activation of the set point change softkey presents the user with a set point screen 500. Included within the set point screen may be a field 502, 504, 506 for each sensor 108, 110. A first line 508 in each field 502, 504, 506 may include text identifying the sensor 108. A second line 510 may be a display of the current set point 114, 116. A third line may be an interactive box for entry of a new set point 114, 116. Where an interactive box is displayed, an alphanumeric keypad of softkeys may also be presented in order to allow the user to enter the new set point 114, 116. As an alternative to the interactive box and keypad, a set of direction arrows 512, 514 may be presented at the end of the second line allowing a user to incrementally change each set point up or down.

The environmental sensor system 12 offers significant advantages over the prior use of previously used functionally apparent control devices. In this case, the blank screen on the device 12 and matching bezel can be made to blend into a wall so as to easily escape notice. Since the system 12 blends into the background, the system 12 is less subject to vandalism or tampering.

Moreover, the bezel and display 20 could be made to display information that would misdirect passersby into believing that the system 12 is directed to another function. For example where the system 10 were to be used in a department store, the display 20 could display advertising or some other logo of the store that provides commercial benefit to the store in addition to the environmental benefits provided by the system 12.

A specific embodiment of a HVAC control system has been described for the purpose of illustrating the manner in which the invention is made and used. It should be understood that the implementation of other variations and modifications of the invention and its various aspects will be apparent to one skilled in the art, and that the invention is not limited by the specific embodiments described. Therefore, it is contemplated to cover the present invention and any and all modifications, variations, or equivalents that fall within the true spirit and scope of the basic underlying principles disclosed and claimed herein.

## Claims

1. A device comprising:
at least one environmental sensor;
a control processor that compares data from the at least one environmental sensor with a reference value, the processor providing an output indicating the environmental data exceeds the reference value;
a communication interface coupled to the processor, the communication interface transfers the output of the control processor to a remotely located control panel; and
an interactive display coupled to the processor, the display depicting environmental data from the at least one environmental sensor for a predetermined time period after activation of the interactive display by a user and a blank screen thereafter.

2. The device as in claim 1 wherein the at least one environmental sensor further comprises one of a carbon dioxide detector, a thermal sensor and a humidity sensor.

3. The device as in claim 1 wherein the at least one environmental sensor further comprises a carbon dioxide detector, a thermal sensor and a humidity sensor.

4. The device as in claim 1 further comprising a bezel around the display with an appearance substantially matching the interactive display with the blank screen.

5. The device as in claim 1 further comprising an interface processor that controls the interactive display, detects a first activation of the interactive display by a user, activates a timer in response to the first activation and causes the interactive display to show the environmental data for the predetermined time period as determined by the activated timer.

6. The device as in claim 5 further comprising a password entry screen displayed on the interactive display by the interface processor upon a second activation of the interactive display within the predetermined time period.

7. A device comprising:
a wall mounted housing;
an environmental sensor of the housing;
a control processor of the housing that compares data from the environmental sensor with a reference set point value, the processor providing an output indicating the environmental data exceeds the reference value;
a communication interface of the housing used by the processor to transfer the output of the control processor to a remotely located control panel;
an interactive display disposed on the housing; and
a display screen interface associated with to the processor, the interface assumes a default state where the interface displays a blank screen on the display and an active state where the interface displays data from the environmental processor on the display, the interface assuming the default state each time the interactive display has not been activated for a first predetermined time period.

8. The device as in claim 7 wherein the at least one environmental sensor further comprises one of a carbon dioxide detector, a thermal sensor and a humidity sensor.

9. The device as in claim 7 wherein the at least one environmental sensor further comprises a carbon dioxide sensor, a temperature sensor and a humidity sensor.

10. The device as in claim 9 wherein the set point further comprising a carbon dioxide set point, a temperature set point and a humidity set point and wherein the control processor independently reports an environmental parameter of any sensor that exceeds the corresponding set point.

11. The device as in claim 10 further comprising a password screen depicted on the interactive display upon activation of the interactive display twice within a second predetermined time period wherein the second predetermined time period is less than the first predetermined time period.

12. The device as in claim 11 further comprising a password processor that compares any password entered through the password screen with a password within a memory.

13. The device as in claim 12 further comprising a set point change screen depicted upon successful entry of the password.

14. A device comprising:
a wall mounted enclosure;
an environmental sensor system within the enclosure detecting environmental conditions proximate the wall mounted enclosure;
a communication interface that communicates at least one environmental parameter of the environmental sensor system to a remotely located controller; and
an interactive display disposed on the enclosure, the display depicting a real time environmental parameter detected by the environmental sensor system, but only for a predetermined time after activation of the interactive display by a user and, after the predetermined time, the interactive display becomes blank.

15. The device as in claim 14 wherein the environmental sensor system further comprises one or more of a temperature sensor, a humidity sensor and a carbon dioxide sensor.
